# EUROPÄISCHE PATENTANMELDUNG

(11) **EP 1 186 979 A1**
(43) Veröffentlichungstag der Anmeldung: **13.03.2002**
(21) Anmeldenummer: 00810813.6
(22) Anmeldetag: 08.09.2000
(51) Int. Cl.: G05B 19/418, G05B 19/042

(54) **Feldgerät und verteiltes Leitsystem**

(71) Anmelder: ABB RESEARCH LTD., 8050 Zürich (CH)
(72) Erfinder: Kirrmann, Hubert, 5405 Baden (CH)
(74) Vertreter: ABB Patent Attorneys

(57) **Zusammenfassung**

In einem verteilten Leitsystem, welches mehrere Feldgeräte (10...17) aufweist, weist jedes der Feldgeräte (10...17) einen Buskoppler (3) mit elektrischen Busanschlüssen (5,6) und mit optischen Anschlüssen (9) auf. Mehrere der Feldgeräte (10...17) sind jeweils sowohl über einen der elektrischen Busanschlüsse (5,6) als auch über die optischen Anschlüsse (9) mit anderen Feldgeräten (10...17) wirkverbunden. Mehrere Feldgeräte (10...17) bilden bezüglich des Kommunikationsbusses eine kettenförmige Anordnung, in welcher sich optische Busabschnitte (20) und elektrische Busabschnitte (30) abwechseln.

## Beschreibung

### Technisches Gebiet

Die Erfindung bezieht sich auf das Gebiet der Leittechnik. Sie bezieht sich auf ein Feldgerät gemäss dem Oberbegriff des Patentanspruches 1 und auf ein verteiltes Leitsystem gemäss dem Oberbegriff des Patentanspruches 4.

### Stand der Technik

Eine derartiges verteiltes Leitsystem oder DCS ("Distributed Control System) ist allgemein bekannt: Es weist mehrere Feldleitgeräte oder Feldgeräte auf, welche als wesentliche Funktion physische Variablen eines Prozesses messen, sammeln, verteilen, verarbeiten oder überwachen, wobei ein Feldgerät jeweils in unmittelbarer Nähe des zu steuernde Prozesses angesiedelt ist und deshalb unwirtlichen Umweltbedingungen widerstehen soll. Die Feldgeräte sind untereinander und gegebenenfalls mit einem zentralen Leitrechner mittels eines oder mehrerer Kommunikationsbusse verbunden. Als Bus wird hier ein Medium verstanden, welches Signale von einem Sender an mehrere Empfänger rundverteilt, wobei ein gesendetes Signal die verschiedenen Empfänger mit einem Verzug erreicht, welcher gleich der Propagationszeit durch das Medium ist, zuzüglich eines Verzuges durch eventuelle Verstärker oder Wiederholer, die das Signal regenerieren, ohne dessen Informationsinhalt zu verändern. Als Gegensatz zu einem Bus ist ein Ring zu verstehen, welcher Signale von Gerät zu Gerät schleift, wobei jedes Gerät die Signale verändern kann, bevor es sie weiterleitet.

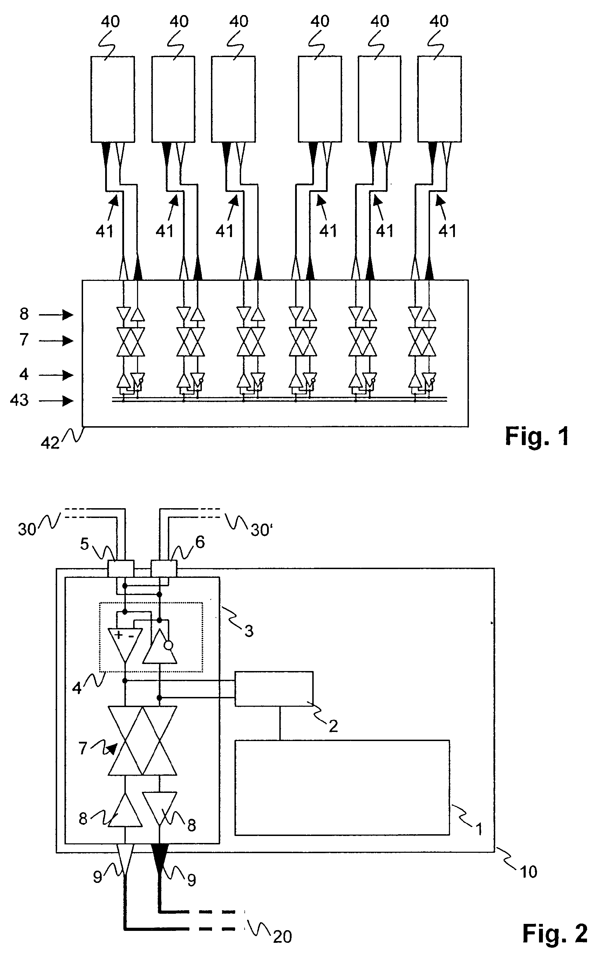

Als Kommunikationsbusse werden im allgemeinen elektrische Busse eingesetzt. Jedoch ist eine Verwendung optischer Fasern zur Kommunikation zwischen Feldleitgeräten wünschbar, da optische Fasern gegenüber elektrischen Verbindungen Vorteile bezüglich Datensicherheit, Preis, Gewicht und Verträglichkeit gegenüber elektromagnetischen Störungen aufweisen. Da jedoch optische Fasern jeweils nur Punkt-zu-Punkt Verbindungen realisieren, werden zur Vernetzung von Geräten respektive zur Realisierung eines Bussystems sogenannte Sternkoppler eingesetzt. Ein verteiltes Leitsystem mit faseroptischen Kommunikationsverbindungen gemäss dem Stand der Technik ist in Figur 1 schematisch gezeigt: Mehrere Feldgeräte 40 gemäss dem Stand der Technik sind über Glasfaserpaare 41 sternförmig an einen Sternkoppler 42 angeschlossen. Der Sternkoppler weist für jeden Anschluss optoelektrische Übertrager 8, einen Wiederholer 7, elektrische Übertrager 4 und einen elektrischen Bus 43 auf. Der Sternkoppler 42 verteuert jedoch das Leitsystem gegenüber einem Leitsystem mit elektrischen Kommunikationsbussen und zwingt zu einer unerwünschten Konzentration der Glasfaserpaare 41 auf eine zentrale Komponente, also auf den Sternkoppler 42.

### Darstellung der Erfindung

Es ist deshalb Aufgabe der Erfindung, ein Feldgerät und ein verteiltes Leitsystem der eingangs genannten Art zu schaffen, welche die oben genannten Nachteile beheben.

Diese Aufgabe lösen ein Feldgerät mit den Merkmalen des Patentanspruches 1 und ein verteiltes Leitsystem mit den Merkmalen des Patentanspruches 4.

Das erfindungsgemässe Feldgerät mit optischen Anschlüssen zum Anschluss einer optischen Kommunikationsverbindung weist einen Buskoppler mit einem elektrischen Busanschluss und mit den optischen Anschlüssen auf, wobei durch den Buskoppler Signale vom elektrischen Busanschluss an die optischen Anschlüsse und umgekehrt übertragbar sind

Im erfindungsgemässen verteilten Leitsystem, welches mehrere erfindungsgemässe Feldgeräte aufweist, sind mehrere der Feldgeräte jeweils sowohl über den elektrischen Busanschluss als auch über die optischen Anschlüsse mit anderen Feldgeräten zu Kommunikationszwecken wirkverbunden.

Vorzugsweise bilden mindestens drei Feldgeräte bezüglich des Kommunikationsbusses ein serielle oder kettenförmige Anordnung, in welcher optische Busabschnitte und elektrische Busabschnitte einander abwechseln.

Die Erfindung bietet den Vorteil, dass Feldgeräte ohne zusätzlichen Geräteaufwand, insbesondere ohne einen Sternkoppler, zu einem Kommunikationsnetzwerk mit einem gemeinsamen Kommunikationsbus zusammengeschaltet sind. Dieser gemeinsame Kommunikationsbus weist also sowohl optische als auch elektrische Busabschnitte auf, welche jeweils einen räumlichen Abstand zwischen Feldgeräten überbrücken.

In einer bevorzugten Ausführungsform der Erfindung sind die Feldgeräte derart miteinander verbunden, dass räumlich längere Busabschnitte durch optische Busabschnitte und räumlich kürzere Busabschnitte durch elektrische Busabschnitte überbrückt werden. Dadurch wird der Einfluss von elektromagnetischen Störungen, die sich naturgemäss auf lange elektrische Verbindungen stärker als auf kurze auswirken, minimiert.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: schematisch ein verteiltes Leitsystem mit faseroptischen Kommunikationsverbindungen gemäss dem Stand der Technik;
- Figur 2: schematisch ein Feldgerät gemäss der Erfindung; und
- Figuren 3-6: schematisch verschiedene Anordnung von Feldgeräten und Busabschnitten gemäss der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

Figur 2 zeigt schematisch ein Feldgerät 10 gemäss der Erfindung. Das Feldgerät 10 weist ein Leitfunktionsmittel 1, einen Buscontroller 2 und erfindungsgemäss einen Buskoppler 3 auf. Das Leitfunktionsmittel 1 ist beispielsweise ein Mikrorechner mit Schnittstellen zu Sensoren und Aktoren, welches wesentliche Funktionen des Feldgerätes 10, welche eingangs erwähnt sind, realisiert. Der Buscontroller 2 dient zur Kommunikation des Leitfunktionsmittels 1 mit dem Buskoppler 3. Der Buskoppler 3 weist elektrische Übertrager 4 zur Ein- und Ausgabe elektrischer Signale an einen oder mehrere Abschnitte 30,30' eines elektrischen Busses auf, welche an einen ersten elektrischen Busanschluss 5 oder einen zweiten elektrischen Busanschluss 6 angeschlossen sind. Diese beiden elektrischen Busanschlüsse sind elektrisch parallel geschaltet um ein Verketten von Feldgeräten 10 über elektrische Busabschnitte zu vereinfachen. Es kann jedoch auch nur ein einziger elektrischer Busanschluss vorhanden sein, ohne dass dadurch eine Realisierung der Erfindung beeinträchtigt ist.

Der Buskoppler 3 weist einen Wiederholer 7, auch Repeater oder Regenerator genannt, zur Wiederherstellung und Verstärkung von Signalen sowie zur Trennung von ein- und ausgehenden Signalen auf. Der Repeater ist mit optoelektrischen Übertragern 8,8' des Buskopplers 3 zur Umsetzung von elektrischen Signalen in ausgehende optische Signale respektive von eingehenden optischen Signalen in elektrische Signale wirkverbunden. Die optoelektrischen Übertrager 8,8' sind über optische Anschlüsse 9 an optische Fasern einer optischen Kommunikationsverbindung angeschlossen. Eine optische Kommunikationsverbindung weist zwei Fasern auf, also je eine für jede Kommunikationsrichtung, welche zusammem einen optischen Busabschnitt 20 bilden. Der Buskoppler 3 überträgt Signale eines elektrischen Busabschnittes 30,30' mittels des elektrischen Übertragers 4, des Wiederholers 7 und der optoelektrischen Übertrager 8,8' an einen optischen Busabschnitt 20 und umgekehrt. Der Buskoppler 3 erlaubt damit eine bidirektionale Kommunikation und eine transparente Übertragung von Bussignalen zwischen elektrischen und optischen Busabschnitten.

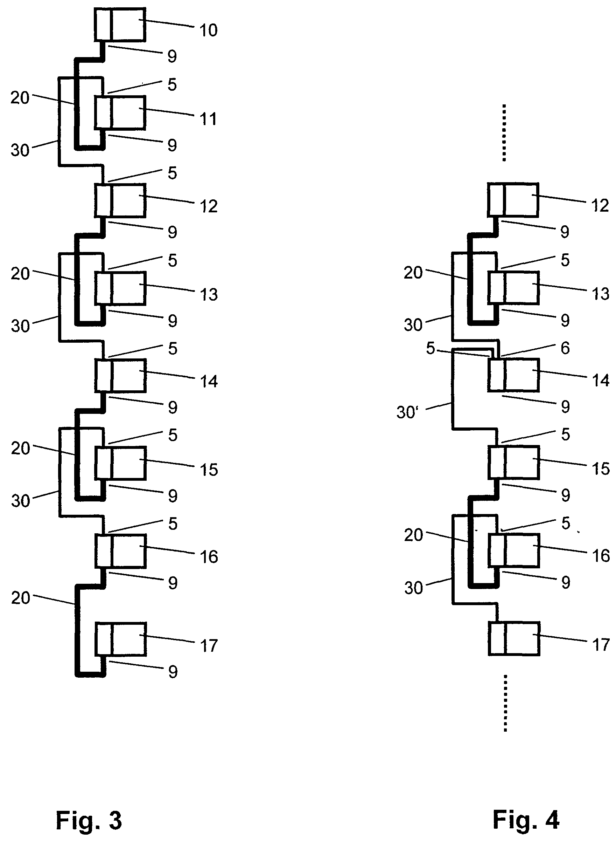

Figur 3 zeigt schematisch eine erste Anordnung von Feldgeräten und Busabschnitten gemäss der Erfindung. Mehrere Feldgeräte 10...17, von denen zumindest ein Teil räumlich voneinander getrennt angeordnet sind, sind abwechslungsweise über optische Busabschnitte 20 und elektrische Busabschnitte 30 miteinander wirkverbunden respektive kommunizieren über diese Busabschnitte miteinander. Die erwähnten Busabschnitte bilden zusammen mit den Buskopplern 3 der Feldgeräte 10...17 einen gemeinsamen Kommunikationsbus des Leitsystems: Ein Signal, welches von einem beliebigen Leitgerät 10...17 mittels seines Buscontrollers auf einem optischen und/oder einem elektrischen Busabschnitt gesendet wird, wird über die anderen Busabschnitte 20,30 und Buskoppler 3 des Leitsystems an alle anderen Leitgeräte 10...17 übertragen. Der Klarheit halber sind die optischen Busabschnitte 20 und die elektrischen Busabschnitte 30 in den Figuren 3 bis 6 als einfache Linien anstelle von Doppellinien gezeichnet.

In einer bevorzugten Ausführungsform der Erfindung bilden mindestens drei, mindestens vier oder mindestens fünf Feldgeräte 10...17 bezüglich des Kommunikationsbusses eine kettenartige oder "daisy-chain" Anordnung, in welcher sich optische Busabschnitte und elektrische Busabschnitte abwechseln. Ein kettenförmige Anordnung wird auch durchgeschleifte Anordnung oder "Reissleine" genannt.

Jedes der Feldgeräte 10...17, mit Ausnahme derjenigen, die sich an einem Ende einer Kette befinden, ist also jeweils über einen elektrischen Busanschluss 5,6 als auch über die optischen Anschlüsse 9 des Feldgerätes 10...17 mit jeweils zwei anderen Feldgeräten 10...17 wirkverbunden.

In einer bevorzugten Ausführungsform der Erfindung sind die Feldgeräte 10...17 derart miteinander verbunden, dass räumlich längere Busabschnitte durch optische Busabschnitte 20 und kürzere Busabschnitte durch elektrische Busabschnitte 30 überbrückt werden. Diese kürzeren, elektrischen Busabschnitte sind typischerweise, je nach der Stärke von elektromagnetischen Störungen, höchstens 10 bis 50 oder 100 Meter lang, und mindestens 10 bis 50 Zentimeter lang.

In einer weiteren bevorzugten Ausführungsform der Erfindung sind die Feldgeräte 10...17 in verschiedenen Schränken oder in Anordnungen untergebracht, welche auf zumindest annähernd gleichem elektrischen Potential liegen und eine elektromagnetisch verträgliche Umgebung aufweisen. Dabei kommunizieren die Feldgeräte 10...17 innerhalb eines Schrankes respektive einer Anordnung über elektrische Busabschnitte 30 miteinander, und Feldgeräte 10...17, welche sich in verschiedenen Schränken respektive Anordnungen befinden, kommunizieren über einen oder mehrere optische Busabschnitte 20 miteinander.

Falls, wie in dieser ersten Anordnung, jedes Feldgerät 10...17 jeweils an nur einen einzigen elektrischen Busabschnitt 30 angeschlossen ist, so sind Buskoppler 3 mit jeweils nur einem einzigen elektrischen Busanschluss 5,6 verwendbar..

Figur 4 zeigt schematisch eine zweite Anordnung von Feldgeräten und Busabschnitten gemäss der Erfindung. Darin sind bei einem ersten Feldgerät 14 die beide elektrischen Busanschlüsse 5,6 an einen ersten elektrischen Busabschnitt 30 zu einem ersten Feldgerät 13 respektive einen zweiten elektrischen Busabschnitt 30' zu einem zweiten Feldgerät 15 angeschlossen und werden die optischen Anschlüsse 9 nicht verwendet. Dieses erste Feldgerät 14 ist also nur über zwei elektrische Busabschnitte 30,30' mit zwei anderen Feldgeräten 13,15 wirkverbunden. Diese Anordnung ist von Vorteil, wenn dadurch optische Busabschnitte 20 zwischen weiteren Feldgeräten 12 und 13 respektive Feldgeräten 15 und 16 zu liegen kommen und diese optischen Busabschnitte 20 räumlich längeren Busabschnitten entsprechen, bei denen elektromagnetische Interferenzen zu minimieren sind.

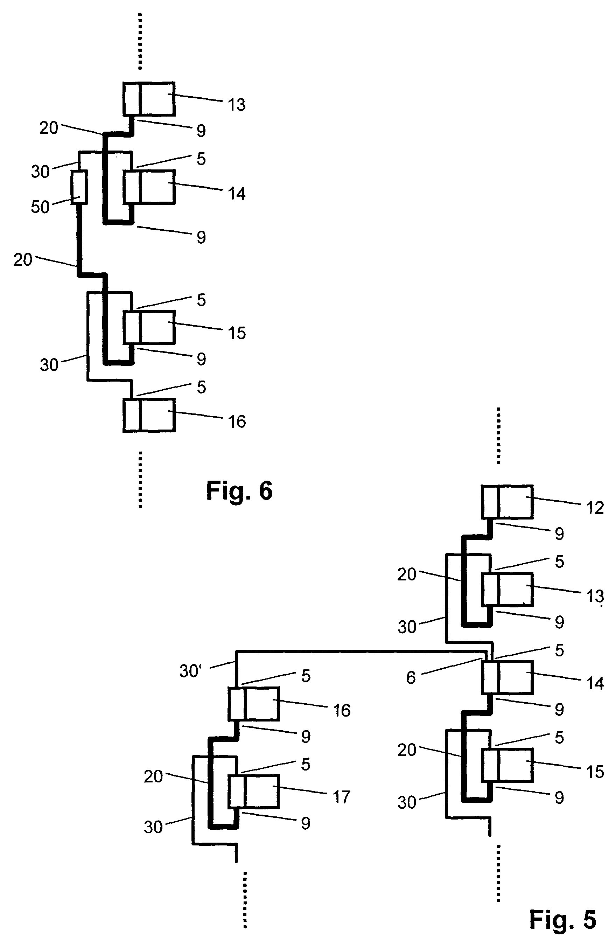

Figur 5 zeigt schematisch eine dritte Anordnung von Feldgeräten und Busabschnitten gemäss der Erfindung. Darin ist ein erstes Feldgerät 14 über zwei elektrische Busabschnitte 30 respektive 30' ohne dazwischenliegende Buskoppler 3 mit zwei anderen Feldgeräten 13 respektive 16 wirkverbunden und über einen optischen Busabschnitt 20 mit einem weiteren Feldgerät 15 wirkverbunden. Ausgehend von dieser verzweigten Anordnung ist eine baumartige oder eine vernetzte Topologie des Kommunikationsbusses möglich.

In der zweiten und der dritten Anordnung ist zusammengefasst mindestens ein erstes Feldgerät 14 über zwei elektrische Busabschnitte 30, welche beide am ersten Feldgerät 14 angeschlossen sind, mit zwei weiteren Feldgeräten 13 und 15 respektive 16 wirkverbunden.

Figur 6 zeigt schematisch eine vierte Anordnung von Feldgeräten und Busabschnitten gemäss der Erfindung. Darin ist mindestens einem ersten Feldgerät 14 ein Strahlkoppler 50 als Signalübertrager zwischen einem elektrischen und einem optischen Busabschnitt zugeordnet. Der Strahlkoppler ist im Wesentlichen wie ein Buskoppler 3 aufgebaut und weist ebenfalls mindestens einen elektrischen Busanschluss und optische Anschlüsse auf, benötigt jedoch keinen Buscontroller 2. Ein elektrischer Busanschluss des Strahlkopplers 50 ist über einen elektrischen Busabschnitt 30 mit einem elektrischen Busanschluss 5,6 des ersten Feldgerätes 14 wirkverbunden, und ein optischer Anschluss des Strahlkopplers 50 ist über einen optischen Busabschnitt 20 mit einem optischen Anschluss 9 eines zweiten Feldgerätes 15 wirkverbunden. Vorzugsweise ist der elektrische Busabschnitt 30 räumlich kurz und ist der Strahlkoppler 50 in räumlicher Nähe des ersten Feldgerätes 14 angeordnet. Diese Anordnung weist den Vorteil auf, dass bei Bedarf ein einzelnes Feldgerät 14 über zwie längere optische Busabschnitte 20 mit benachbarten Feldgeräten 13,15 verbindbar ist, beispielsweise falls die benachbarten Feldgeräte 13,15 derart weit vom ersten Feldgerät 14 entfernt sind, dass ein elektrischer Busabschnitt 30 nicht zulässig ist.

In einer weiteren Ausführungsform der Erfindung weist ein Strahlkoppler 40 mindestens zwei elektrische Busanschlüsse auf. Einem ersten Feldgerät sind mehrere Strahlkoppler 40 zugeordnet, deren elektrische Busanschlüsse miteinander verbunden sind. Damit wird eine sternartige Topologie des Kommunikationsnetzwerkes gebildet.

In einer weiteren Ausführungsform der Erfindung sind optische und/oder elektrische Busabschnitte zur Redundanz doppelt ausgeführt, wobei entsprechend zusätzliche Buskoppler 3 eingesetzt werden.

In einer weiteren vorteilhaften Ausführungsform der Erfindung weist der Buskoppler 3 eines Feldgerätes 10 eine von einer Speisung des Feldgerätes 10 respektive des Leitfunktionsmittels 1 unabhängige eigene Speisung und gegebenenfalls eine eigene Signalverarbeitung auf. Dadurch ist der Kommunikationsbus auch bei Störungen eines Feldgerätes respektive seiner Speisung nicht unterbrochen.

Die Erfindung bedingt keinen wesentlichen zusätzlichen Kostenaufwand für ein Feldgerät 10...17, da bei einem Gerät mit einem optischen Anschluss ohnehin eine Umsetzung auf elektrische Signale erforderlich ist. Somit ist zur Bildung eines oder mehrerer elektrischer Busanschlüsse 5,6 im Wesentlichen nur ein zusätzlich elektrischer Übertrager 4 erforderlich.

### Bezugszeichenliste

- 1: Leitfunktionsmittel
- 2: Buscontroller
- 3: Buskoppler
- 4: elektrische Übertrager
- 5: erster elektrischer Busanschluss
- 6: zweiter elektrischer Busanschluss
- 7: Wiederholer
- 8,8': optoelektrischer Übertrager
- 9: optische Anschlüsse
- 10...17: Feldgerät
- 20: optischer Busabschnitt
- 30,30': elektrischer Busabschnitt
- 40: Feldgerät gemäss dem Stand der Technik
- 41: Glasfaserpaare
- 42: Sternkoppler
- 43: elektrischer Bus
- 50: Strahlkoppler

## Patentansprüche

1. Feldgerät (10) mit optischen Anschlüssen (9) zum Anschluss einer optischen Kommunikationsverbindung, **dadurch gekennzeichnet, dass** das Feldgerät (10) einen Buskoppler (3) mit einem elektrischen Busanschluss (5,6) und mit den optischen Anschlüssen (9) aufweist, wobei durch den Buskoppler (3) Signale vom elektrischen Busanschluss (5,6) an die optischen Anschlüsse (9) und umgekehrt übertragbar sind.

2. Feldgerät (10) gemäss Anspruch 1, **dadurch gekennzeichnet, dass** der Buskoppler (3) zur transparenten Übertragung von Bussignalen zwischen einem elektrischen Busabschnitt (30), der an einen elektrischen Busanschluss (5,6) angschlossen ist, und einem optischen Busabschnitt (20), der an die optischen Anschlüsse (9) angeschlossen ist, geeignet ist.

3. Feldgerät (10) gemäss Anspruch 1 oder 2, **dadurch gekennzeichnet, dass** der Buskoppler (3) eine vom Feldgerät (10) unabhängige Speisung aufweist.

4. Verteiltes Leitsystem, welches mehrere Feldgeräte (10...17) aufweist, welche durch einen Kommunikationsbus miteinander wirkverbunden sind, **dadurch gekennzeichnet,**
**dass** jedes der Feldgeräte (10...17) einen Buskoppler (3) mit einem elektrischen Busanschluss (5,6) und mit optischen Anschlüssen (9) aufweist,
**dass** durch den Buskoppler (3) Signale vom elektrischen Busanschluss (5,6) an die optischen Anschlüsse (9) und umgekehrt übertragbar sind,
und **dass** mehrere der Feldgeräte (10...17) jeweils sowohl über den elektrischen Busanschluss (5,6) und einen elektrischen Busabschnitt (30,30') als auch über die optischen Anschlüsse (9) und einen optischen Busabschnitt (20) mit anderen Feldgeräten (10...17) wirkverbunden sind.

5. Leitsystem gemäss Anspruch 4, **dadurch gekennzeichnet, dass** mindestens drei Feldgeräte (10...17) bezüglich des Kommunikationsbusses eine kettenartige Anordnung bilden, in welcher sich optische Busabschnitte und elektrische Busabschnitte abwechseln.

6. Leitsystem gemäss Anspruch 4 oder 5, **dadurch gekennzeichnet, dass** die Feldgeräte (10...17) derart miteinander verbunden sind, dass räumlich längere Busabschnitte durch optische Busabschnitte (20) und räumlich kürzere Busabschnitte durch elektrische Busabschnitte (30,30') überbrückt sind.

7. Leitsystem gemäss einem der Ansprüche 4 bis 6, **dadurch gekennzeichnet, dass** die Feldgeräte (10...17) in verschiedenen Schränken respektive Anordnungen untergebracht sind, und dass die Feldgeräte (10...17) jeweils innerhalb eines Schrankes respektive einer Anordnung über elektrische Busabschnitte (30,30') miteinander wirkverbunden sind, und Feldgeräte (10...17), welche sich in verschiedenen Schränken respektive Anordnungen befinden, über einen optischen Busabschnitt (20) miteinander wirkverbunden sind.

8. Leitsystem gemäss einem der Ansprüche 4 bis 7, **dadurch gekennzeichnet, dass** mindestens ein erstes Feldgerät (14) über zwei elektrische Busabschnitte (30,30') mit zwei weiteren Feldgeräten (13,15 respektive 13,16) wirkverbunden ist

9. Leitsystem gemäss Anspruch 4, **dadurch gekennzeichnet, dass** mindestens einem ersten Feldgerät (14) ein Strahlkoppler (50) als Signalkoppler zwischen einem elektrischen und einem optischen Busabschnitt zugeordnet ist, und bei dem ein elektrischer Busanschluss des Strahlkopplers (50) mit einem elektrischen Busanschluss (5,6) des ersten Feldgerätes (14) wirkverbunden ist und ein optischer Anschluss des Strahlkopplers (50) mit einem optischen Anschluss (9) eines zweiten Feldgerätes (15) wirkverbunden ist.

10. Leitsystem gemäss Anspruch 9, **dadurch gekennzeichnet, dass** dem ersten Feldgerät (14) mehrer Strahlkoppler (50) zugeordnet und über elektrische Busabschnitte miteinander wirkverbunden sind.
